# EUROPÄISCHE PATENTSCHRIFT

(11) **EP 3 027 357 B1**
(45) Veröffentlichungstag und Bekanntmachung des Hinweises auf die Patenterteilung: **02.08.2017**
(21) Anmeldenummer: 14736635.5
(22) Anmeldetag: 02.07.2014
(51) Int. Cl.: B23Q 1/66

(54) **WERKZEUGMASCHINE MIT EINER WERKSTÜCKWECHSELEINRICHTUNG**
MACHINE TOOL HAVING A WORKPIECE CHANGING DEVICE
MACHINE-OUTIL COMPRENANT UN DISPOSITIF DE CHANGEMENT DE PIÈCE À USINER

(30) Priorität: 29.07.2013 DE 102013012633
(43) Veröffentlichungstag der Anmeldung: 08.06.2016
(73) Patentinhaber: Alfing Kessler Sondermaschinen GmbH, 73433 Aalen (DE)
(72) Erfinder: BURKHARDT, Rainer, 73433 Aalen (DE); FEIFEL, Hans, 73433 Aalen (DE); GÖGGERLE, Markus, 73497 Tannhausen (DE); HEIERMANN, Ulrich, 73207 Plochingen (DE); KRIEGER, Manfred, 73574 Iggingen (DE); STRAUB, Ulrich, 73079 Süssen (DE)
(74) Vertreter: Patentanwälte Bregenzer und Reule Partnerschaftsgesellschaft mbB
(86) Internationale Anmeldenummer: PCT/EP2014/001814
(87) Internationale Veröffentlichungsnummer: WO 2015/014430

(56) Entgegenhaltungen:
- EP-A1- 2 062 687
- DE-A1-102005 028 358

## Beschreibung

Die Erfindung betrifft eine Werkzeugmaschine zur Werkstückbearbeitung von Werkstücken, wobei die Werkzeugmaschine mindestens eine erste Spindelbaugruppe mit mindestens einer Arbeitsspindel aufweist, an der ein Bearbeitungswerkzeug zur Werkstückbearbeitung anordenbar ist, wobei die Werkzeugmaschine eine Werkstückhalteeinrichtung zum Halten von Werkstücken für die Werkstückbearbeitung mit dem Bearbeitungswerkzeug aufweist, wobei die Werkzeugmaschine eine Führungsanordnung zur relativen Positionierung der die Werkstücke haltenden Werkstückhalteeinrichtung und der ersten Spindelbaugruppe für die Werkstückbearbeitung aufweist, wobei die Führungsanordnung eine Werkstückhalter-Führung zum Führen der Werkstückhalteeinrichtung für eine Positionierung eines die Werkstücke haltenden Werkstückhalters relativ zu der ersten Spindelbaugruppe umfasst.

Eine aus DE 10 2005 028 358 A1 bekannte Werkzeugmaschine ist mit einer Werkzeugwechseleinrichtung, beispielsweise einem seitlich angeordneten Werkzeugmagazin, ausgestattet, das von einem Arbeitsroboter mit Bearbeitungswerkzeugen bestückt wird. Ein frontal vor einer Spindelbaugruppe, deren Arbeitsspindeln vertikal übereinander angeordnet sind, angeordneter Werkstückhalter hält die Werkstücke während der Werkstückbearbeitung. Die bekannte Werkzeugmaschine ist eine Mehrspindel-Werkzeugmaschine.

Zur Lösung der Aufgabe bei einer Werkzeugmaschine der eingangs genannten Art vorgesehen, dass sie eine Werkstückwechseleinrichtung, insbesondere einen Arbeitsroboter, zum Auswechseln von Werkstücken an der Werkstückhalteeinrichtung aufweist, die eine Positionierbewegung des Werkstückhalters während der Werkstückbearbeitung durch das jeweilige Bearbeitungswerkzeug mitmacht und zum Austausch mindestens eines nicht in der Werkstückbearbeitung befindlichen Werkstücks an dem Werkstückhalter während der Werkstückbearbeitung eines anderen vom Werkstückhalter gehaltenen Werkstücks durch die erste Spindelbaugruppe ausgestaltet ist.

Es ist dabei ein Grundgedanke, dass der Werkstückwechsel sozusagen die Werkstückbearbeitung nicht stört, d.h. dass die Werkstückbearbeitung fortgesetzt werden kann, während der Werkstückwechsel am Werkstückhalter durchgeführt wird. Die Werkstückbearbeitung kann also gleichzeitig mit dem Werkstückwechsel durchgeführt werden, was die Maschine sehr schnell macht.

Zur Synchronisierung der Bewegungen der Werkstückhalteeinrichtung und der Werkstückwechseleinrichtung ist vorteilhaft eine gemeinsame Steuerung zur Ansteuerung beider Komponenten, nämlich der Werkstückhalteeinrichtung und der Werkstückwechseleinrichtung vorgesehen. Es ist aber auch möglich, dass zwei separate, die Werkstückwechseleinrichtung und die Werkstückhalteeinrichtung ansteuernde Steuerungen synchronisiert arbeiten. Eine vorteilhafte Ausführungsform der Erfindung sieht beispielsweise eine zur Ansteuerung der Werkstückhalteeinrichtung vorgesehene Halter in gestrichelten und eine zur Ansteuerung der Werkstückwechseleinrichtung vorgesehene und mit der Halter-Steuerung synchronisierte Wechsler-Steuerung vor. Die beiden Steuerungen können beispielsweise über einen Bus, zum Beispiel einen Feldbus, miteinander kommunizieren.

Eine sowohl die Werkstückwechseleinrichtung als auch die Werkstückhalteeinrichtung ansteuernde Steuerung ist zweckmäßigerweise zur Ausführung eines ersten Steuerungsmoduls und eines zweiten Steuerungsmoduls ausgestaltet, die gemeinsam auf einem Prozessor der Steuerung ausführbar sind und unmittelbar miteinander kommunizieren, beispielsweise über einen gemeinsamen Speicherbereich, anhand von Nachrichten innerhalb des Steuerungsrechners oder dergleichen. Die Steuerungsmodul sind z.B. Softwaremodule. Eine vorteilhafte Ausführungsform kann aber auch vorsehen, dass nur ein einziges Steuerungsmodul vorhanden ist, das zur Ansteuerung der Werkstückhalteeinrichtung und der Werkstückwechseleinrichtung ausgestaltet ist, so dass eine synchrone Ansteuerung schon allein deshalb gewährleistet ist.

Die Werkstückwechseleinrichtung oder deren Steuerung weist zweckmäßigerweise eine Eingangsschnittstelle auf, über die ein die Position der Werkstückhalteeinrichtung enthaltendes Positionssignal empfangbar ist. Die Werkstückwechseleinrichtung ist zweckmäßigerweise zur Ausführung einer Überlagerung-Positionierbewegung ausgestaltet, bei der einer ersten Positionierbewegung eine zweite Positionierbewegung überlagert ist. Die erste Positionierbewegung dient zum Austauschen von Werkstücken bei einer ortsfest stehenden Werkstückhalteeinrichtung, was an sich üblich ist, während die zweite Positionierbewegung zum simultanen Folgen der Bewegung der Werkstückhalteeinrichtung dient. Im Prinzip leistet also die Werkstückwechseleinrichtung überlagert beide Positionierbewegungen, so dass sich ein fließender Ablauf beim Werkstückwechsel ergibt.

Neben dem simultanen Ansteuern von Werkstückwechseleinrichtung und Werkstückhalteeinrichtung, so dass eine quasi gleichzeitiges, jedenfalls koordiniertes Bewegen beider Komponenten möglich ist, ist es auch möglich, dass die Werkstückhalteeinrichtung eine Positionsmarkierung aufweist, anhand derer die Werkstückwechseleinrichtung der Werkstückhalteeinrichtung sozusagen folgen kann. Die Positionsmarkierung umfasst beispielsweise eine Funkmarkierung, eine optische Markierung oder dergleichen. Durch eine so genannte Triangulation ist es z.B. möglich, dass die Werkstückwechseleinrichtung der Werkstückhalteeinrichtung folgt. Unter dem Begriff "folgen" soll aber nicht verstanden werden, dass die Werkstückwechseleinrichtung der Werkstückhalteeinrichtung sozusagen hinterher hinkt, sondern dass eine hohe Genauigkeit und simultane Bewegung beider Komponenten gewährleistet ist.

An der Werkstückwechseleinrichtung ist zweckmäßigerweise eine Magazin-Halterung zum Halten mindestens zweier Werkstücke vorgesehen, so dass die Werkstückwechseleinrichtung simultan mindestens zwei Werkstücke, vorzugsweise alle einer simultanen Werkstückbearbeitung zugeordnete Werkstücke wechseln kann. Wenn also beispielsweise drei Arbeitsspindeln bei einer jeweiligen Spindelbaugruppe vorgesehen sind, sind gleichfalls drei Werkstücke gleichzeitig vom Werkstückhalter bereitzustellen. Die Magazin-Halterung ermöglicht dann zweckmäßigerweise das gleichzeitige Auswechseln dreier Werkstücke. Die Zahl drei ist dabei nur beispielhaft zu verstehen und kann beispielsweise auch zwei, vier oder mehr lauten.

An der Werkstückhalteeinrichtung befindet sich zweckmäßigerweise mindestens eine Einführschräge zum Einführen des jeweiligen Werkstücks. Es ist auch vorteilhaft, wenn eine Rasteinrichtung zum Verrasten des jeweiligen Werkstücks an der Werkstückhalteeinrichtung vorgesehen ist. Beide Maßnahmen tragen dazu bei, dass etwaige Ungenauigkeiten bei der Positionierung der Werkstückwechseleinrichtung relativ zur Werkstückhalteeinrichtung, wobei die Werkstückwechseleinrichtung dem Bearbeitungsprozess bei der Werkstückbearbeitung sozusagen folgt, nämlich der Bewegung der Werkstückhalteeinrichtung, ausgeglichen werden.

Es ist vorteilhaft, wenn der Werkstückwechsel während Bewegungsphasen stattfindet, bei denen sich die Werkstückhalteeinrichtung langsam bewegt, so dass die Positionierarbeit der Werkstückwechseleinrichtung erleichtert wird. Die erläuterte Steuerung, zum Beispiel das gemeinsame Steuermodul oder die verschiedenen Steuerungsmodule, sind zweckmäßigerweise so ausgestaltet, dass langsame Bewegungsphasen zum effektiven Werkstückwechsel genutzt werden, während die Werkstückwechseleinrichtung beispielsweise während schnellerer Bewegungsphasen abseits der Werkstückhalteeinrichtung positioniert ist oder einem Trägerelement der Werkstückhalteeinrichtung zunächst noch folgt, bevor sie während einer anschließenden langsameren Bewegungsphase Werkstücke am Trägerelement ablegt oder von dort aufnimmt.

Bevorzugt ist es, wenn die Werkstückwechseleinrichtung zum Betätigen der Werkstückhalteeinrichtung in eine zum Halten eines Werkstücks vorgesehene Haltestellung und/oder in eine zum Freigeben und Entfernen eines Werkstücks vorgesehene Lösestellung ausgestaltet. Die Werkstückwechseleinrichtung betätigt also aktiv die Werkstückhalteeinrichtung, so dass diese beispielsweise in eine Spannstellung verfährt oder in eine Lösestellung, um den Werkstückwechsel zu ermöglichen.

Die Werkstückwechseleinrichtung ist zweckmäßigerweise zur Positionierung der Werkstücke zu mindestens einer weiteren Arbeitsstation abseits der Werkstückhalteeinrichtung ausgestaltet. Beispielsweise kann die Arbeitsstation zum Entgraten von Werkstücken dienen. Aber auch ein Kennzeichnen und/oder Vermessen von Werkstücken kann an der weiteren Arbeitsstation stattfinden. Somit kann also die Werkstückwechseleinrichtung beispielsweise während Zeiten, wo kein Werkstückwechsel eine der Werkstückhalteeinrichtung nötig ist, weitere Arbeiten leisten.

Die erfindungsgemäße Werkzeugmaschine kann beispielsweise eine Einspindel-Werkzeugmaschine sein, d.h. dass nur eine einzige Arbeitsspindel vorhanden ist. Bevorzugt handelt es sich jedoch um eine Mehrspindel-Werkzeugmaschine.

Eine bevorzugte Ausführungsform der Erfindung sieht vor, dass die Werkzeugmaschine mindestens eine zweite Spindelbaugruppe mit mindestens einer Arbeitsspindel aufweist. Selbstverständlich ist es vorteilhaft, wenn die erste und die zweite Spindelbaugruppe (oder jede weitere Spindelbaugruppe) mehrere, zum Beispiel 2, 3 oder 4 Arbeitsspindeln, aufweisen.

Vorteilhaft ist bei der Werkzeugmaschine vorgesehen, dass die erste Spindelbaugruppe an einer ersten Spindelbaugruppenführung der Führungsanordnung und die mindestens eine zweite Spindelbaugruppe an einer von der ersten Spindelbaugruppenführung separaten zweiten Spindelbaugruppenführung der Führungsanordnung geführt sind, so dass die Spindelbaugruppen unabhängig voneinander in einen Arbeitsbereich, in dem die Werkstücke für die Werkstückbearbeitung von der Werkstückhalteeinrichtung bereitgestellt werden, und einen zum Wechseln von Bearbeitungswerkzeugen an den Arbeitsspindeln vorgesehenen Werkzeugwechselbereich verstellbar sind.

Es ist ein Grundgedanke dabei, dass die Spindelbaugruppen jeweils an individuellen Spindelbaugruppenführungen gelagert sind, beispielsweise Linearführungen, Drehführungen oder dergleichen, so dass mindestens eine Spindelbaugruppe die Werkstückbearbeitung durchführen kann, während mindestens eine andere Spindelbaugruppe gerade beim Werkzeugwechsel ist, also in den Werkzeugwechselbereich hinein bewegt ist. Für eine Werkstückbearbeitung steht also stets eine der Spindelbaugruppen zur Verfügung.

Die voneinander separaten Spindelbaugruppenführungen ermöglichen, dass die Spindelbaugruppen kollisionsfrei bewegt werden können, also nicht miteinander kollidieren, wenn beispielsweise eine Spindelbaugruppe gerade die Werkstückbearbeitung durchführt, während die andere Spindelbaugruppe in Richtung des Werkzeugwechselbereich oder aus diesem heraus in Richtung des Arbeitsbereichs verstellt wird.

In der nachfolgenden Beschreibung sowie auch bei den in der Zeichnung dargestellten Ausführungsbeispielen sind beispielsweise jeweils zwei bewegliche Spindelbaugruppen vorgesehen, wobei selbstverständlich auch weitere, beispielsweise drei oder vier Spindelbaugruppen vorgesehen sein können. Es ist auch denkbar, dass eine Spindelbaugruppe nur mit einer einzigen Arbeitsspindel ausgestattet ist, während zwei oder mehr andere Spindelbaugruppen jeweils Mehrspindel-Spindelbaugruppen sind, also mehrere Arbeitsspindeln aufweisen.

Ein vorteilhaftes Ausführungsbeispiel sieht vor, dass die Spindelbaugruppen zur selben Werkzeugwechsel-Seite beweglich sind, so dass an einer einzigen, nämlich derselben Werkzeugwechsel-Seite der Werkzeugwechsel vorgenommen wird. Der Werkzeugwechselbereich für mindestens zwei Spindelbaugruppen ist also zweckmäßigerweise an der einzigen Werkzeugwechsel-Seite neben dem Arbeitsbereich vorgesehen, so dass die mindestens zwei Spindelbaugruppen für den Werkzeugwechsel jeweils zu derselben Werkzeugwechsel-Seite bewegt werden. An der Werkzeugwechsel-Seite befindet sich dann beispielsweise ein Werkzeugmagazin oder ein Bedienplatz für eine Bedienperson. Der Aufbau der Maschine ist somit sehr platzsparend und ökonomisch. Es ist aber möglich, dass beispielsweise mindestens eine dritte, weitere Spindelbaugruppe zu einer anderen Werkzeugwechsel-Seite für den Werkzeugwechsel bewegt wird. Es können also beispielsweise zwei oder mehr Werkzeugwechsel-Seiten vorgesehen sein, wobei es dann vorteilhaft ist, wenn mindestens zwei Spindelbaugruppen einen gemeinsamen Werkzeugwechselbereich haben.

Prinzipiell ist es aber auch möglich, dass trotz der voneinander separaten Spindelbaugruppenführungen unterschiedliche Werkzeugwechselbereiche für die erste und die mindestens eine zweite Spindelbaugruppe vorgesehen sind. Es ist also möglich, dass beispielsweise die erste Spindelbaugruppe zu einer ersten Seite, die andere Spindelbaugruppe zur einer anderen zweiten Seite für den Werkzeugwechsel verstellt werden.

Bevorzugt ist es, wenn zwischen dem Werkzeugwechselbereich und dem Arbeitsbereich mindestens eine Abschottung oder eine Schottwand vorgesehen ist. Somit kann der Werkzeugwechsel abseits des Arbeitsbereichs durchgeführt werden, ohne dass dort beispielsweise Kühlmittel, Späne oder dergleichen für eine Verschmutzung beispielsweise von Werkzeughalterungen oder dergleichen an den Arbeitsspindeln sorgen.

Eine Abschottung ist aber auch vorteilhaft zwischen dem Arbeitsbereich und einem zum Auswechseln der Werkstücke an der Werkstückhalteeinrichtung vorgesehenen Werkstückwechselbereich. Mithin verschmutzen also die Werkstücke bzw. die Halterungen für die Werkstücke beim Werkstückwechsel nicht durch beispielsweise Kühlmittel, Schmiermittel, Späne oder dergleichen.

Im Werkzeugwechselbereich befindet sich vorzugsweise ein Werkzeugmagazin. Im Werkzeugmagazin sind Bearbeitungswerkzeuge abgelegt und stehen für den Wechsel zur jeweiligen Arbeitsspindel bereit. Bevorzugt ist es, wenn das Werkzeugmagazin zum gleichzeitigen Wechsel von mindestens zwei Bearbeitungswerkzeugen ausgestaltet ist. Die Zahl der gleichzeitig auswechselbaren Bearbeitungswerkzeuge entspricht zweckmäßigerweise der Anzahl der Arbeitsspindeln der jeweiligen Spindelbaugruppe, an der Bearbeitungswerkzeuge zu tauschen oder zu wechseln sind. Somit können vorzugsweise sämtliche Arbeitsspindeln gleichzeitig Bearbeitungswerkzeuge wechseln.

Bei dem Werkzeugmagazin handelt es sich beispielsweise um eine Rundmagazin und/oder ein Trommelmagazin und/oder ein Kettenmagazin und/oder ein Regalmagazin oder Kombinationen davon. Mithin ist es also auch möglich, dass beispielsweise für die erste Spindelbaugruppe ein Werkzeugmagazin eines ersten Typs, zum Beispiel ein Rundmagazin, vorgesehen ist, während für die zweite Spindelbaugruppe oder weitere Spindelbaugruppen ein Werkzeugmagazin eines von dem ersten Typ verschiedenen zweiten Typs, zum Beispiel ein Regalmagazin, vorgesehen ist. Zweckmäßig ist es jedoch, wenn ein und dasselbe Werkzeugmagazin mindestens zwei, vorzugsweise sämtlichen der anhand der Spindelbaugruppenführungen sozusagen mobilen Spindelbaugruppen zugeordnet ist.

Die Spindelbaugruppenführungen sind zweckmäßigerweise als Linearführungen ausgestaltet. Es ist aber denkbar, dass beispielsweise die erste Spindelbaugruppenführung eine andere Bauart hat als die Spindelbaugruppenführung der zweiten Spindelbaugruppe oder weiterer Spindelbaugruppen, so dass z.B. eine Linearführung und eine Drehführung vorgesehen sind.

Bevorzugt ist es, wenn die erste Spindelbaugruppenführung und die zweite Spindelbaugruppenführung parallel verlaufende Führungsachsen oder Bewegungsachsen aufweisen. Zweckmäßigerweise handelt es sich bei den Führungsachsen mindestens einer Spindelbaugruppenführung, zweckmäßigerweise aller Spindelbaugruppenführungen, um horizontal verlaufende Führungsachsen.

Die Arbeitsspindeln mindestens einer der Spindelbaugruppen sind zweckmäßigerweise in einer Reihenrichtung nebeneinander angeordnet. Die Reihenrichtung kann eine horizontale oder eine vertikale Reihenrichtung sein. Bevorzugt ist es, wenn die Reihenrichtung parallel zu einer Führungsachse oder Bewegungsachse der jeweiligen ersten Spindelbaugruppenführung oder der mindestens einen zweiten Spindelbaugruppenführung ist.

Mindestens zwei Arbeitsspindeln einer Spindelbaugruppe sind zweckmäßigerweise horizontal nebeneinander oder horizontal übereinander angeordnet. Es können bei mindestens einer Spindelbaugruppe aber auch beispielsweise übereinander und nebeneinander angeordnete Arbeitsspindeln vorgesehen sein.

In dem Arbeitsbereich befindet sich zweckmäßigerweise mindestens eine ortsfeste Spindelbaugruppe mit mindestens einer Arbeitsspindel. Die ortsfeste Spindelbaugruppe kann selbstverständlich auch mehrere Arbeitsspindeln aufweisen.

Die ortsfeste Arbeitsspindel oder die ortsfesten Arbeitsspindeln eignet sich beispielsweise dazu, eine spezielle Positioniermechanik, insbesondere zu einer sehr feinen Verstellung des Bearbeitungswerkzeugs relativ zu dem zu bearbeitenden Werkstück, vorzusehen. Beispielsweise kann mit der mindestens einen ortsfesten Arbeitsspindel eine Feinbohrung hergestellt werden.

Die erste Spindelbaugruppe und/oder die mindestens eine zweite Spindelbaugruppe sind zweckmäßigerweise in dem Arbeitsbereich unterhalb der mindestens einen ortsfesten Spindelbaugruppe angeordnet. Die jeweils zugeordnete Spindelbaugruppenführung kann somit relativ nahe am Boden oder Untergrund geführt werden, beispielsweise direkt an einem Maschinenbett der Werkzeugmaschine angeordnet werden. Zudem ist die mindestens eine ortsfeste Spindelbaugruppe günstig für einen Werkzeugwechsel zugänglich, was später noch deutlich wird.

Bevorzugt ist eine Werkstückwechseleinrichtung zum Auswechseln von Werkstücken an der Werkstückhalteeinrichtung vorgesehenen. Die Werkstückwechseleinrichtung kann beispielsweise von einem Arbeitsroboter gebildet werden, aber auch von einem anderen Werkstückwechsler, der möglicherweise weniger flexibel einsetzbar ist als ein Arbeitsroboter.

Die Werkstückwechseleinrichtung ist zweckmäßigerweise zum Eingriff in den Arbeitsbereich und zum Auswechseln der Bearbeitungswerkzeuge direkt an einer oder mehreren im Arbeitsbereich befindlichen Arbeitsspindeln ausgestaltet, zum Beispiel der vorgenannten ortsfesten Spindelbaugruppe oder mindestens einer ortsfesten Arbeitsspindel. Der Arbeitsroboter kann also beispielsweise direkt in den Arbeitsbereich eingreifen und dort an einer oder mehreren Arbeitsspindeln Bearbeitungswerkzeuge wechseln. Es kann zum Beispiel vorgesehen sein, dass die Werkstückwechseleinrichtung zum Durchgreifen durch ein Gestell der Werkzeughalteeinrichtung hindurch bis zu der Arbeitsspindel, an der das Bearbeitungswerkzeug gewechselt werden soll, ausgestaltet ist.

Zweckmäßig ist es auch, wenn die Werkstückwechseleinrichtung zum Auswechseln der Bearbeitungswerkzeuge in ein Werkzeugmagazin hinein oder daraus heraus oder beides ausgestaltet ist.

Es ist vorteilhaft, wenn die Werkstückwechseleinrichtung zusätzlich zu dem Auswechseln von Werkstücken auch zum Auswechseln von Bearbeitungswerkzeugen an dem erwähnten Werkzeugmagazin ausgestaltet ist. Mithin kann also auch das Werkzeugmagazin von der Werkstückwechseleinrichtung, zum Beispiel dem Arbeitsroboter, bedient werden.

Die Führungsanordnung umfasst zweckmäßigerweise eine Werkstückhalter-Führung zum Führen der Werkstückhalteeinrichtung für eine Positionierung eines die Werkstücke haltenden Werkstückhalters relativ zu den jeweils bearbeitenden Bearbeitungswerkzeugen. Somit kann also das Werkstück relativ zum Bearbeitungswerkzeug bewegt werden, um die vorzugsweise spanabhebende Werkstückbearbeitung zu leisten.

Die Werkstückhalter-Führung umfasst beispielsweise einen oder mehrere Schlitten, mit dem der Werkstückhalter beispielsweise in Z-Richtung und/oder Y-Richtung und/oder X-Richtung verstellbar ist.

An dieser Stelle sei bemerkt, dass die Positionierarbeit verständlich auch auf Seiten der jeweiligen Arbeitsspindel, insbesondere der Spindelbaugruppe, geleistet werden kann. Beispielsweise sind nämlich die erste und/oder die mindestens eine zweite Spindelbaugruppe anhand der Spindelbaugruppenführungen für die Werkstückbearbeitung positionierbar. Die Positionierung der Spindelbaugruppen erfolgt zweckmäßigerweise in X-Richtung, kann aber auch in Z-Richtung und/oder Y-Richtung und/oder X-Richtung vorgesehen sein.

Die Werkstückhalter-Führung ist zweckmäßigerweise zum Führen des Werkstückhalters in mindestens einer zu der Spindelbaugruppen-Führungsachsen der ersten Spindelbaugruppenführung und/oder der zweiten Spindelbaugruppenführung der mindestens einen ersten oder zweiten Spindelbaugruppe quer, zum Beispiel rechtwinkelig quer, verlaufenden Werkstück-Führungsachse ausgestaltet.

Ein bevorzugtes Ausführungsbeispiel, das in der Zeichnung noch näher erläutert wird, sieht vor, dass die Spindelbaugruppenführungen der ersten Spindelbaugruppe und der mindestens einen zweiten Spindelbaugruppe zu einer linearen Verstellung parallel zu einer ersten Spindelbaugruppen-Führungsachse vorgesehen sind. Die erste Führungsachse ist beispielsweise eine horizontal verlaufende X-Achse.

Die Werkstückhalter-Führung ist zweckmäßigerweise zum Führen des Werkstückhalters parallel zu einer zu der ersten Spindelbaugruppen-Führungsachse rechtwinkeligen verlaufenden zweiten Führungsachse, beispielsweise in einer horizontalen Z-Achse, ausgestaltet. Somit kann also beispielsweise die jeweilige Spindelbaugruppe in X-Richtung verfahren werden, während die Werkstücke von der Werkstückhalteeinrichtung in Richtung der Spindelachsen der Arbeitsspindeln, nämlich in Z-Richtung durch die Werkstückhalter-Führung, zum Beispiel einen Schlitten, und/oder in Y-Richtung geführt werden.

In diesem Zusammenhang ist es nämlich zweckmäßig, wenn eine Verstellung des Werkstückhalters auch in Richtung einer dritten Führungsachse möglich ist, die vorteilhaft vertikal in Y-Richtung verläuft. Jedenfalls ist die dritte Führungsachse zweckmäßigerweise rechtwinkelig zur ersten und zweiten Führungsachse.

Wie schon erwähnt, ermöglicht die erste Spindelbaugruppenführung und/oder die zweite Spindelbaugruppenführung (oder jede weitere Spindelbaugruppenführung) eine Positionierung und/oder eine Zustellbewegung der jeweiligen Spindelbaugruppe zu mindestens einem jeweils zu bearbeitenden Werkstück.

Die Arbeitsspindeln mindestens einer der Spindelbaugruppen oder aller Spindelbaugruppen sind zweckmäßigerweise ortsfest in dem jeweiligen Spindelgehäuse angeordnet. Es ist aber auch möglich, dass mindestens eine Arbeitsspindel in dem jeweiligen Spindelgehäuse beweglich angeordnet ist, beispielsweise für eine Zustellbewegung zum jeweils zu bearbeitenden Werkstück.

Die Spindelbaugruppenführungen, jedenfalls mindestens eine Spindelbaugruppenführung, der Spindelbaugruppen sind zweckmäßigerweise an einem turmartigen oder portalartigen Gestell angeordnet. Es ist auch möglich, dass die Spindelbaugruppenführungen zweier Spindelbaugruppen an voneinander separaten Gestellen angeordnet sind. Unter einem Gestell kann in diesem Zusammenhang auch beispielsweise eine Art Maschinenbett oder Führungsbett verstanden werden, an welchem eine Spindelbaugruppenführung angeordnet ist. Mithin kann also beispielsweise eine Spindelbaugruppenführung unten, nahe am Maschinenbett, verlaufen, während eine andere, oberhalb verlaufende Spindelbaugruppenführung an einem Gestell angeordnet ist.

Das flexible Konzept der Erfindung erlaubt es, dass die Spindeln der ersten Spindelbaugruppe und die Spindeln der mindestens einen zweiten Spindelbaugruppe gleichzeitig in bearbeitendem Eingriff mit den von der Werkstückhalteeinrichtung gehaltenen Werkstücken bringbar sind. Es ist aber auch möglich, dass die Spindelbaugruppenführungen der Spindelbaugruppen einen derartigen Abstand zueinander haben, dass bei der Werkstückbearbeitung der Werkstücke durch die eine Spindelbaugruppe die andere Spindelbaugruppe an der Werkstück-Halterung oder den Werkstücken vorbei bewegbar ist, zum Beispiel zur Verstellung in Richtung des Werkzeugwechselbereich oder aus dem Werkzeugwechselbereich zurück in den Arbeitsbereich.

Die Werkstückhalteeinrichtung kann beispielsweise einen sogenannten Doppelwendespanner aufweisen. Die Werkstückhalter dieses Doppelwendespanners sind an einem Gestell mit zwei Armen schwenkbar gelagert, wobei die beiden Arme um eine zentrale Schwenkachse schwenken. Die Werkstückhalter können an den Armen in der Art von Planeten relativ zu der zentralen Schwenkachse schwenken. Die Werkstückhalteeinrichtung kann auch z.B. einen Werkstückhalter mit mehreren Werkstückhaltebereichen aufweisen, wobei der Werkstückhalter in der Art eines Balkens ausgestaltet ist und um eine Schwenkachse schwenkt.

Die erfindungsgemäße Werkzeugmaschine ist zweckmäßigerweise eine Werkzeugmaschine zur spanabhebenden Bearbeitung von Werkstücken. Bei den Werkstücken handelt es sich vorzugsweise um Motorbauteile, zum Beispiel Pleuel, Motorblöcke oder dergleichen. Die Bearbeitungswerkzeuge sind zweckmäßigerweise Fräsköpfe, Bohrer, Drehwerkzeuge oder dergleichen.

Nachfolgend werden Ausführungsbeispiele der Erfindung anhand der Zeichnung erläutert. Es zeigen:
- Figur 1: eine perspektivische Schrägansicht einer ersten erfindungsgemäßen Werkzeugmaschine mit einem Regal-Werkzeugmagazin und einer Steuerung,
- Figur 2: die Werkzeugmaschine gemäß Figur 1, jedoch mit zwei weiteren Arbeitsstationen, die von einer Werkstückwechseleinrichtung in Gestalt eines Arbeitsroboters bedient werden,
- Figur 3: die Werkzeugmaschine gemäß Figur 1, jedoch zur Veranschaulichung von Details mit zum Teil entfernten Komponenten,
- Figur 4: eine Variante des Ausführungsbeispiels gemäß Figur 1, jedoch mit einem Trommelmagazin,
- Figur 5: eine weitere Variante der Werkzeugmaschine gemäß Figur 1, jedoch mit einem Kettenmagazin, und
- Figur 6: ein zweites Ausführungsbeispiel einer erfindungsgemäßen Werkzeugmaschine mit einer alternativen Spindelgruppen-Führungsanordnung.

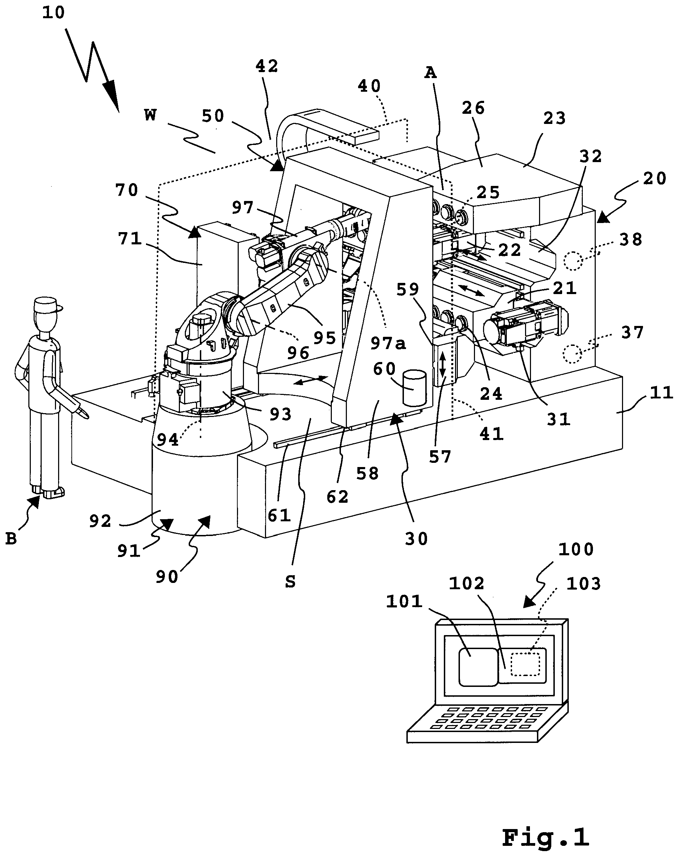

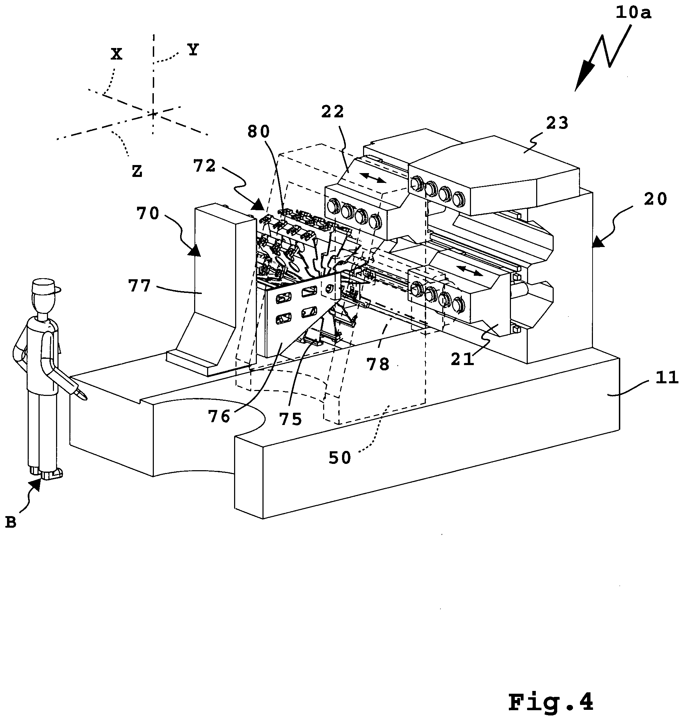

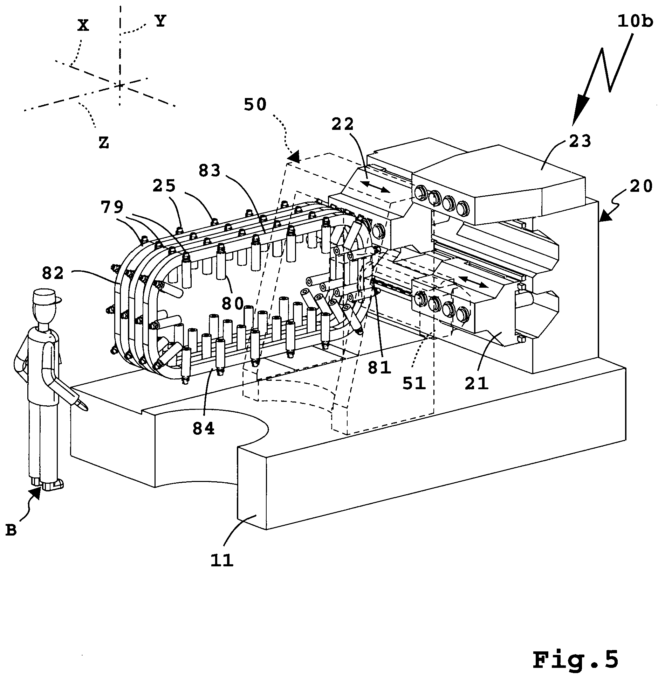

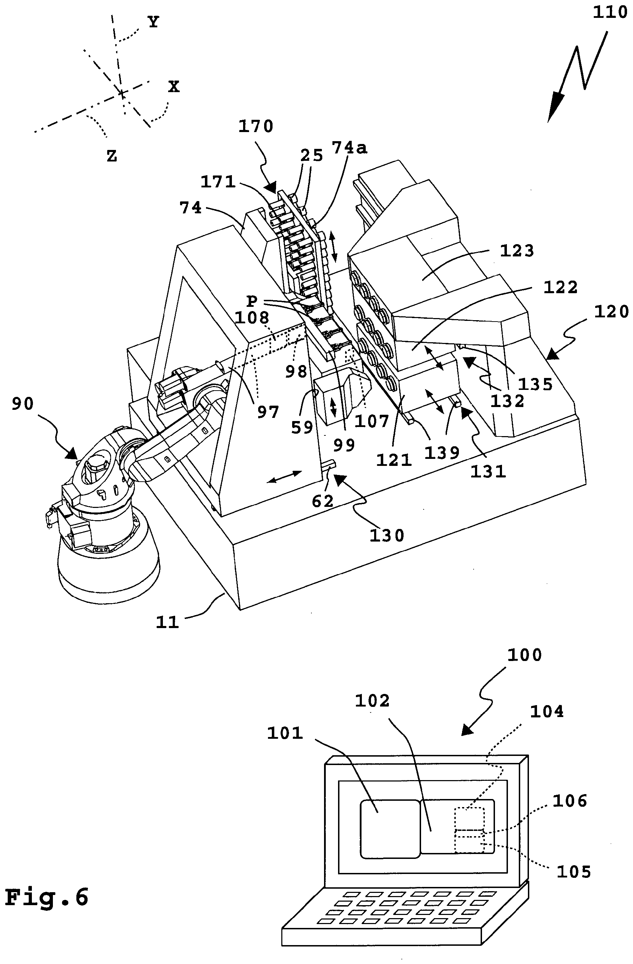

In der nachfolgenden Beschreibung sind gleiche oder gleichartige Komponenten teilweise mit denselben Bezugsziffern versehen. Bei den beiden in den Figuren 4 und 5 dargestellten Varianten der Werkzeugmaschine gemäß Figur 1 sind teilweise Bezugsziffern mit einem zusätzlichen Buchstaben "a" oder "b" verwendet, während beim Ausführungsbeispiel gemäß Figur 6 die Bezugsziffern im Vergleich zu den Ausführungsbeispielen gemäß Figuren 1-5 um 100 größer sind. Es versteht sich, dass die verschiedenen Varianten, die im Zusammenhang mit den unterschiedlichen Ausführungsbeispielen erwähnt werden, ohne weiteres auch kombinierbar sind.

An einem Maschinenbett 11 einer Werkzeugmaschine 10 ist ein Gestell 20 mit einer ersten Spindelbaugruppe 21, einer zweiten Spindelbaugruppe 22 und einer dritten Spindelbaugruppe 23 angeordnet, die jeweils insgesamt 4 Arbeitsspindeln 24 aufweisen.

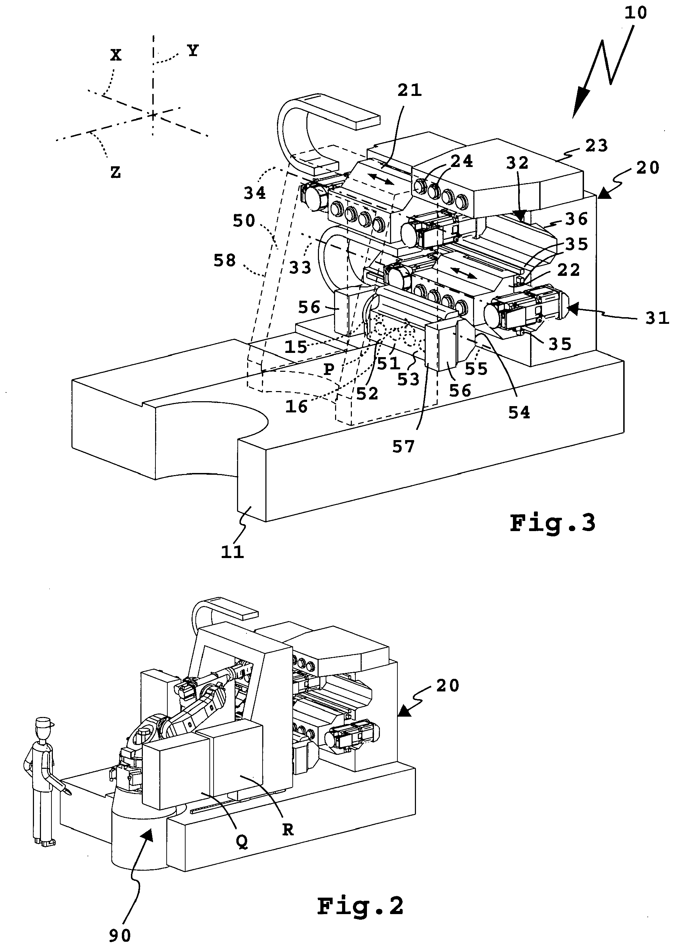

An den schematisch dargestellten Arbeitsspindeln 24 sind Bearbeitungswerkzeuge 25, zum Beispiel Bohrköpfe, Fräswerkzeuge oder dergleichen andere insbesondere spanabhebende oder zu einer Schleifbearbeitung vorgesehene Bearbeitungswerkzeuge lösbar anordenbar. Mit den Bearbeitungswerkzeugen können Werkstücke P, die schematisch in Figur 3 dargestellt sind, bearbeitet werden. Bei den Werkstücken P handelt es sich beispielsweise um Pleuel oder sonstige Metall-Werkstücke. Selbstverständlich eignet sich die Werkzeugmaschine 10 auch für andere Werkstücke, zum Beispiel Motorblöcke oder dergleichen. In diesem Zusammenhang sei erwähnt, dass eine Bearbeitung von Motorbauteilen ein bevorzugtes Anwendungsfeld der Erfindung ist.

Das Gestell 20 ist turmartig aufgebaut.

Die Spindelbaugruppen 21-23 sind in vertikaler Richtung, also in Richtung einer Y-Achse, übereinander angeordnet. Die Spindelbaugruppe 21 ist die untere, die Spindelbaugruppe 22 mittlere und die Spindelbaugruppe 23 die obere Spindelbaugruppe der Anordnung.

Die Arbeitsspindeln 24 der Spindelbaugruppen 21-23 sind jeweils in einem Spindelgehäuse 26 aufgenommen.

Die Spindelbaugruppe 23 ist auch ortsfest im Arbeitsbereich A der Werkzeugmaschine 10, der zur Werkstückbearbeitung vorgesehen ist angeordnet, während die beiden anderen Spindelbaugruppen 21, 22 sozusagen mobile Spindelbaugruppen sind und zwischen dem Arbeitsbereich A und einem Werkzeugwechselbereich W beweglich sind. Im Werkzeugwechselbereich W findet der Wechsel von Bearbeitungswerkzeugen 25 statt, im Arbeitsbereich A die Werkstückbearbeitung der Werkstücke P. Der Werkzeugwechselbereich W ist an einer Werkzeugwechsel-Seite 42 neben dem Gestell 20 vorgesehen.

Eine Führungsanordnung 30 mit einer ersten Spindelbaugruppenführung 31 für die Spindelbaugruppe 21 und einer zweiten Spindelbaugruppenführung 32 für die Spindelbaugruppe 22 ermöglicht die Verstellung der Spindelbaugruppen 21, 22 zwischen dem Arbeitsbereich A und dem Werkstückwechselbereich W.

Die Spindelbaugruppenführungen 31, 32 haben sich in Richtung von Führungsachsen 33, 34 erstreckende Führungsschienen 35, an denen die Spindelgehäuse 26 der Spindelbaugruppen 21, 22 in der Art von Schlitten linear beweglich gelagert sind. Mithin sind also Linearführungen 36 realisiert. Es versteht sich, dass die Spindelgehäuse 26 unmittelbar Schlitten bilden, aber auch an einem Schlitten angeordnet sein können.

Die Schlitten oder Spindelgehäuse 26 der Spindelbaugruppen 21, 22 sind durch Antriebe 37, 38 unabhängig voneinander antreibbar, so dass sie unabhängig voneinander entlang der Führungsachsen 33, 34 bewegt werden können. Bei den Antrieben 37, 38 handelt es sich beispielsweise um elektromotorische und/oder fluidische, zum Beispiel pneumatische oder hydraulische, Antriebe.

Die Führungsachsen 33, 34, die man auch als Bewegungsachsen bezeichnen kann, erstrecken sich parallel zu einer X-Richtung, sozusagen in X-Achsrichtung.

Die Arbeitsspindeln 24 einer jeweiligen Spindelbaugruppe 21, 23, 23 sind in einer Reihenrichtung 27 in der gleichen Richtung nebeneinander wie die Führungsachsen 33, 34, nämlich in Richtung der X-Achse angeordnet.

Die Spindelbaugruppen 21, 22, 23 haben sozusagen eine flach liegende Ausgestaltung, so dass sie in Richtung der Y-Achse und mittelbar über einander und mit geringem Abstand angeordnet sein können.

Der Arbeitsbereich A und der Werkzeugwechselbereich W sind beispielsweise durch eine Schottwand 40 voneinander getrennt, so dass beispielsweise im Arbeitsbereich A anfallende Späne, Kühlmittel oder dergleichen nicht in den Werkzeugwechselbereich W gelangen.

Eine weitere, ebenfalls schematisch angedeutete Schottwand 41 befindet sich zwischen dem Arbeitsbereich A und einem Werkstückwechselbereich S, der zum Auswechseln von Werkstücken P vorgesehen ist.

Die Schottwände 40, 41 können selbstverständlich mehrteilig sein und eine oder mehrere bewegliche Komponenten aufweisen. Die Schottwand 40 kann eine oder mehrere Öffnungen aufweisen, so dass jedenfalls die Spindelbaugruppen 21, 22 vom Arbeitsbereich A in den Werkzeugwechselbereich W und umgekehrt verstellt werden können.

Auch die Schottwand 41 kann eine oder mehrere Öffnungen aufweisen. Jedenfalls erlaubt die Schottwand 41 eine Beweglichkeit einer Werkstückhalteeinrichtung 50.

Die Werkstückhalteeinrichtung 50 umfasst beispielsweise einen Werkstückhalter 51. Der Werkstückhalter 51 umfasst einen balkenartigen Haltekörper 52, der mehrere Werkstückhaltebereiche 53, 54 (oder weitere Werkstückhaltebereiche) umfasst, die zueinander winkelig sind. Der Haltekörper 52 ist um eine Schwenkachse 55 schwenkbar an Lagerböcken 56 gelagert. Die Lagerböcke 56, ihrerseits wiederum bilden zusammen mit dem Haltekörper 52 einen Schlitten 57, der an einem rahmenartigen Gestell 58 der Werkstückhalteeinrichtung 50 beweglich gelagert ist, nämlich in einer Y-Richtung.

An einer dem Gestell 20 zugewandten Frontseite des Gestells 58 befinden sich beispielsweise Führungsschienen einer Werkstückhalter-Führung 59, die eine Verstellung des Werkstückhalters 51 in Y-Richtung ermöglicht. Ein schematisch angedeuteter Antrieb 60 treibt den Schlitten 57 an. Die Werkstückhalter-Führung 59 ist eine Linearführung.

Das Gestell 58 seinerseits wiederum ist an Führungsschienen 61 einer Werkstückhalter-Führung 62 ebenfalls linear beweglich gelagert, jedoch nicht in Y-Richtung, sondern in Richtung einer Z-Achse. Somit kann also das Gestell 58 in der Art eines Schlittens den Werkstückhalter 51 zu den Arbeitsspindeln 24 entlang der Z-Achse vor und zurück verfahren, beispielsweise um Bohrungen durchzuführen.

Die Werkstückhalter-Führungen 59, 62 führen den Werkstückhalter 51 in Richtung einer ersten Werkstück-Führungsachse 63 und einer zweiten Werkstück-Führungsachse 64.

Der andere Schlitten 57 ermöglicht die Verstellbarkeit des Werkstückhalters 51 in Richtung der Y-Achse, so dass der Werkstückhalter 51 relativ zu der jeweils bearbeitenden Spindelbaugruppe 21, 22, 23 positionierbar ist. Bevorzugt sind die Abstände in Y-Richtung zwischen diesen Spindelbaugruppen 21, 22, 23 so bemessen, dass beispielsweise die Spindelbaugruppe 21 ungestört vom Arbeitsbereich A in den Werkzeugwechselbereich W verstellt werden kann, während der Werkstückhalter 51 frontal vor der Spindelbaugruppe 22 oder 23 steht. Es ist aber auch möglich, dass beispielsweise zwischen den Spindelbaugruppen 22 und 23 ein kleinerer Abstand bezüglich der Y-Richtung realisiert ist, so dass beispielsweise die Arbeitsspindeln 24 zweier Spindelbaugruppen 21 und 22 oder 22 und 23 gleichzeitig Werkstücke P bearbeiten können, wenn sie vom Werkstückhalter 51 sozusagen frontal vorn bereitgestellt werden.

Die Führungsanordnung 30 umfasst zur Positionierung von Werkstücken P relativ zu den bearbeitenden Arbeitsspindeln 24 sowohl die Spindelbaugruppenführungen 31, 32, als auch die Werkstückhalter-Führungen 59, 62. Alle Führungen sind dabei Linearführungen, wobei es durchaus im Bereich des Möglichen liegt, dass eine oder mehrere Führungen auch als Drehführungen ausgestaltet sind, d.h. dass beispielsweise Werkstücke P und/oder Arbeitsspindeln 24 zur Werkstückbearbeitung geschwenkt werden. Es ist beispielsweise möglich, dass der Werkstückhalter 51 um die Schwenkachse 55 während der Werkstückbearbeitung schwenkt.

In Werkzeugwechselbereich befindet sich zweckmäßigerweise ein Werkzeugmagazin 70, 170, beispielsweise ein Regalmagazin 71 (Figuren 1 und 2) oder bei der in Figur 6 dargestellten Werkzeugmaschine 110 ein Regalmagazin 171.

Bei der Werkzeugmaschine 10a hingegen ist ein Trommelmagazin 72 vorgesehen, während bei der Werkzeugmaschine 10b ein Kettenmagazin 73 vorhanden ist.

Sämtliche Werkzeugmagazine 70, 170 ermöglichen, dass gleichzeitig mehrere Bearbeitungswerkzeuge 25 an der sich im Werkzeugwechselbereich W befindlichen Spindelbaugruppe 21, 22 gewechselt werden können. Die jeweils bereitgestellten Bearbeitungswerkzeuge 25 sind in der Reihenrichtung 27 nebeneinander angeordnet.

Beispielsweise hat ein Halter 74a des Regalmagazins 71, 171 mehrere Etagen, in denen sich jeweils 4 nebeneinander in der Reihenrichtung 27 angeordnete Bearbeitungswerkzeuge 25 befinden. Der Halter 74a des Regalmagazins ist beispielsweise an einem Ständer 74 linear in Y-Richtung beweglich geführt und mit einem nicht dargestellten Antrieb positionierbar, um die jeweils geeignete Reihe von Bearbeitungswerkzeugen 25 in Position frontal vor der jeweiligen Spindelbaugruppe 21, 22 zu positionieren.

Bei dem Trommelmagazin 72 ist eine Trommel 75 mittels eines Schlittens 76 an einem Ständer 77 in Y-Richtung verfahrbar. Die Trommel 75 weist parallel zu ihrer Drehachse 78, um die sie am Ständer 77 drehbar gelagert ist, an ihrem Außenumfang mehrere Reihen von Werkzeughaltern 80 für Bearbeitungswerkzeuge 25 auf. Durch eine Drehung um die Drehachse 78 kann eine jeweils geeignete Reihe von Werkzeughaltern 80 bzw. Bearbeitungswerkzeugen 25 in Position frontal vor der Spindelbaugruppe 21 oder 22 gebracht werden, wobei der Schlitten 76 die geeignete Y-Position einnimmt. Aus Gründen der Vereinfachung sind Antriebe für die Trommel 75 und den Schlitten 76 nicht dargestellt.

Das Kettenmagazin 73 weist mehrere Kettenstränge 79 auf, beispielsweise 3 oder 4 (entsprechend der Anzahl der Arbeitsspindeln 24 einer jeweiligen Spindelbaugruppe 21). An den Kettensträngen 79 befinden sich Werkzeughalter 80 zum Halten von Bearbeitungswerkzeugen 25.

Die Kettenstränge 79 bzw. die daran angeordneten Werkzeughalter 80 sind entsprechend der Reihenrichtung 27 nebeneinander angeordnet, so dass jeweils 4 Werkzeughalter 80 in Position frontal vor der Spindelbaugruppe 21 und der Spindelbaugruppe 22 stehen kann, wenn diese Spindelbaugruppen 21, 22 im Werkzeugwechselbereich W sind. An einem Kettenstrang 79 können z.B. auch jeweils 2 Werkzeughalter 80 entsprechend der Reihenrichtung 27 nebeneinander angeordnet sein.

Die Anordnung der Kettenstränge 79 ist dabei vorteilhaft so getroffen, dass ein vorderer Strangabschnitt 81 im Werkzeugwechselbereich W frontal vor den Spindelbaugruppen 21, 22 bzw. dem Abschnitt der Spindelbaugruppenführungen 31, 32, der sich in den Werkstückwechselbereich W hinein erstreckt, verläuft, während ein hinterer Strangabschnitt 82 für beispielsweise einen Bediener B oder eine Werkstückwechseleinrichtung 90 bequem zugänglich ist. Zwischen den Strangabschnitten 81, 82 verlaufen Strangabschnitte 83, 84 beispielsweise entlang oder parallel zur Z-Achse.

Die verschiedenen Werkzeugmagazine 70, 170 ermöglichen es also, dass die sich jeweils im Werkzeugwechselbereich W befindliche Spindelbaugruppe 21, 22 gleichzeitig sämtliche Bearbeitungswerkzeuge 25 in freie Werkzeughalter 80 abgelegt und von anderen Werkzeughaltern 80 eine andere Gruppe von Bearbeitungswerkzeugen 25 aufnimmt. Der Prozess ist sehr schnell und effektiv. Dabei ist zu beachten, dass während des Werkzeugwechsels die jeweils andere Spindelbaugruppe 21, 22 im Arbeitsbereich A die Werkstückbearbeitung fortsetzt, also ein unterbrechungsfreier Betrieb möglich ist.

Das Handling und die optimale, schnelle Werkstückbearbeitung wird durch die effektiv arbeitende nachfolgend beschriebene Werkstückwechseleinrichtung 90 weiter verbessert:
Die Werkzeugmaschine 10, 110 ist mit einem Arbeitsroboter 91 ausgestattet, der zum Auswechseln der Werkstücke P an der Werkstückhalteeinrichtung 50 vorgesehen ist und die Werkstückwechseleinrichtung 90 bildet. Die Werkstückwechseleinrichtung 90 wechselt Werkstücke P jedoch nicht nur dann, wenn die Werkzeugmaschine 10, 110 sozusagen stillsteht, d.h. wenn der Werkstückhalter 51 ortsfest ist, sondern auch wenn sich dieser relativ zu dem Gestell 20 bewegt, beispielsweise entlang der Werkzeughalter-Führung 59 und/oder 62 während der Werkstückbearbeitung. Der Arbeitsroboter 91 macht diese Bewegungen mit.

Der Arbeitsroboter 91 weist beispielsweise einen Ständer 92 auf, an dem eine Basis 93 um eine Achse 94 drehbar gelagert ist. Von der Basis 93 erstreckt sich ein Arm 95, der seinerseits an der Basis 93 um eine weitere Achse 96 schwenkbar gelagert ist. Am Arm 95 wiederum ist ein weiterer Arm 97 schwenkbar um eine Achse 97a gelagert. Somit kann ein Greifelement 98 vorn am Arm 97 weitgehend frei im Raum bewegt werden. Der Arbeitsroboter 91 ist beispielsweise ein sogenannter Knickarmroboter.

Am Greifelement 98 befindet sich beispielsweise eine Magazin-Halterung 99, mit welcher der Arbeitsroboter 91 bzw. die Werkstückwechseleinrichtung 90 gleichzeitig mehrere Werkstücke P, zum Beispiel 4, ergreifen und/oder ablegen kann.

Eine Steuerung 100 mit beispielsweise einem Prozessor 101 ist zur Ansteuerung der Werkstückwechseleinrichtung 90 und der Werkstückhalteeinrichtung 50 ausgestaltet. Beispielsweise sind entsprechende Steuerleitungen zwischen der Steuerung 100 und der Werkstückwechseleinrichtung 90 sowie der Werkstückhalteeinrichtung 50 vorhanden (nicht dargestellt). Die Steuerung 100 weist zudem einen Speicher 102 auf, in dem ein Steuerungsmodul 103 gespeichert ist. Bei dem Steuerungsmodul 103 handelt es sich um ein Programmmodul mit durch den Prozessor 101 ausführbaren Programmcode. Durch Ausführung des Steuerungsmoduls 103 steuert die Steuerung 100 die Werkstückwechseleinrichtung 90 und die Werkstückhalteeinrichtung 50 derart simultan an, dass die Werkstückhalteeinrichtung 50 die Werkstücke P relativ zu den Arbeitsspindeln 24 für die entsprechende Werkstückbearbeitung positioniert und der Arbeitsroboter 91 gleichzeitig diese Bewegung mitmacht und Werkstücke P, die sich beispielsweise an dem jeweils nicht in den Arbeitsbereich A geschwenkten Werkstückhaltebereich 53 oder 54 befinden, auswechselt.

Die Werkstückwechseleinrichtung 90 ist dabei zusätzlich noch multifunktional insoweit sie beispielsweise Bearbeitungswerkzeuge 25 in die Werkzeugmagazin 70 einwechseln oder auswechseln kann, wenn gerade kein Werkstückwechsel ansteht und/oder die Werkzeugmaschine 10, 110 eine Arbeitspause hat.

Weiterhin sind exemplarisch in Figur 2 erkennbar noch 2 weitere Arbeitsstationen Q und R vorgesehen, an denen beispielsweise die Werkstücke P entgratet und vermessen werden. Der Arbeitsroboter 91 kann zum Beispiel die Werkstücke P zunächst vom Werkstückhalter 51 wegnehmen und dann sukzessive an den Arbeitsstationen Q und R zur weiteren Bearbeitung ablegen.

Bei dem Maschinenkonzept der Werkzeugmaschine 110 gemäß Figur 6 sind insoweit deren Komponenten mit der obigen Beschreibung übereinstimmen dieselben Bezugsziffern eingezeichnet.

An einem Gestell 120 der Werkzeugmaschine 110 ist oben eine ortsfeste Spindelbaugruppe 123 vorgesehen, unterhalb derer sich eine an einer Spindelbaugruppenführung 132 zwischen dem Arbeitsbereich A und dem Werkstückwechselbereich W anhand einer Spindelbaugruppenführung 132 in Richtung der X-Achse verstellbare Spindelbaugruppe 122 befindet. Unterhalb dieser Spindelbaugruppe 122 befindet sich eine weitere mobile Spindelbaugruppe 121, die an einer Spindelbaugruppenführung 131 ebenfalls in Richtung der X-Achse zwischen dem Arbeitsbereich A und dem Werkstückwechselbereich W beweglich ist. Somit können die Spindelbaugruppen 121 und 122 wie die Spindelbaugruppen 21 und 22 zwischen dem Arbeitsbereich A und dem Werkstückwechselbereich W zur Werkstückbearbeitung bzw. zum Werkstückwechsel verstellt werden.

Ein Unterschied besteht allerdings darin, dass Führungsschienen 135 der Spindelbaugruppenführung 132 direkt an dem Gestell 120 angeordnet sind, nämlich beispielsweise an der der Werkstückhalteeinrichtung 50 zugewandten Frontseite, während Führungsschienen 139 der Spindelbaugruppenführung 131 unten am Maschinenbett 11 angeordnet sind. Somit befinden sich also die Führungselemente der Spindelbaugruppenführungen 131, 132 nicht an ein und demselben Grundgestell.

In Figur 6 wird auch deutlich, dass die Beweglichkeit des Arbeitsroboters 91 derart ausgestaltet ist, dass er bis zu den Arbeitsspindeln 24 der ortsfesten Spindelbaugruppe 23, 123 hin vorstehen oder greifen kann. Sein Greifelement 98 kann beispielsweise Bearbeitungswerkzeuge 25 von diesen ortsfesten Arbeitsspindeln 24 abnehmen und gegen andere Bearbeitungswerkzeuge 25 austauschen. Das Greifelement 98 kann die Bearbeitungswerkzeuge 25 beispielsweise in einem der Werkzeugmagazine 70, 170 ablegen oder von dort aufnehmen. Somit ist eine weitere Funktion der Werkstückwechseleinrichtung 90 möglich.

Ein weiteres Ansteuerungskonzept für die Werkstückwechseleinrichtung 90, derart, dass sie den Positionierbewegungen der Werkstückhalteeinrichtung 50 folgt, ist ebenfalls im Zusammenhang mit Figur 6 angedeutet.

Die Steuerung 100 weist bei diesem Ausführungsbeispiel ein erstes Steuerungsmodul 104 zur Ansteuerung der Werkstückhalteeinrichtung 50 und ein zweites Steuerungsmodul 105 zur Ansteuerung der Werkstückwechseleinrichtung 90 auf, die beide vom Prozessor 101 direkt ausgeführt werden. Bei diesem Konzept ist es besonders einfach, dass die Steuerungsmodule 104, 105 direkt miteinander kommunizieren, beispielsweise um den Bewegungsablauf der Werkstückwechseleinrichtung 90 dem Bewegungsablauf der Werkstückhalteeinrichtung 50 anzupassen. Beispielsweise ist eine Eingangsschnittstelle 106 beim Steuerungsmodul 105 vorhanden, über welche das Steuerungsmodul 105 von dem Steuerungsmodul 104 Positionsnachrichten über anstehende oder aktuell ausgeführte Positionierbewegungen der Werkstückhalteeinrichtung 50 empfängt.

Eine weitere Variante kann vorsehen, dass beispielsweise am Werkstückhalter 51 eine Positionsmarkierung 107 vorgesehen ist, die von einer Ortungseinrichtung 108 an der Werkstückwechseleinrichtung 90 erfasst wird. Die Ortungseinrichtung 108 umfasst beispielsweise mindestens einen Funkempfänger, eine Kamera oder dergleichen andere zu einer jeweiligen Funkbasierten oder optischen Ortung ausgestaltete Empfangselemente. Anhand der Positionsmarkierung 107 kann also die Werkstückwechseleinrichtung 90, beispielsweise das Steuerungsmodul 105, die jeweilige Position des Werkstückhalters 51 erfassen und somit die Position des Greifelement 98 bzw. der Magazin-Halterung 99 simultan nachführen.

Die Ortungseinrichtung 108 und die Positionsmarkierung 107 sind auch für die Realisierung eines Sicherheitskonzepts vorteilhaft, d.h. dass beispielsweise anhand dieser Komponenten die Steuerungsmodule 103 oder 104 und 105 überprüfen, ob die Werkstückwechseleinrichtung 90 relativ zur Werkstückhalteeinrichtung 50 optimal positioniert ist.

Es versteht sich, dass diese Positionierung mit einer gewissen Toleranz behaftet sein kann. In diesem Fall ist es vorteilhaft, wenn eine Rasteinrichtung 15 und/oder eine Einführschräge 16 an den schematisch dargestellten Werkstückhaltern, die zum Beispiel Spannbacken, Klemmfläche oder dergleichen umfassen, an den Werkstückhaltebereichen 53, 54 vorgesehen sind.

## Patentansprüche

1. Werkzeugmaschine zur Werkstückbearbeitung von Werkstücken (P), wobei die Werkzeugmaschine (10; 100) mindestens eine erste Spindelbaugruppe (21; 121) mit mindestens einer Arbeitsspindel (24) aufweist, an der ein Bearbeitungswerkzeug (25) zur Werkstückbearbeitung anordenbar ist, wobei die Werkzeugmaschine eine Werkstückhalteeinrichtung (50) zum Halten von Werkstücken (P) für die Werkstückbearbeitung mit dem Bearbeitungswerkzeug (25) aufweist, wobei die Werkzeugmaschine (10; 100) eine Führungsanordnung (30; 130) zur relativen Positionierung der die Werkstücke (P) haltenden Werkstückhalteeinrichtung (50) und der ersten Spindelbaugruppe (21; 121) für die Werkstückbearbeitung aufweist, wobei die Führungsanordnung (30; 130) eine Werkstückhalter-Führung (59, 62) zum Führen der Werkstückhalteeinrichtung (50) für eine Positionierung eines die Werkstücke (P) haltenden Werkstückhalters (51) relativ zu der ersten Spindelbaugruppe (21; 121) umfasst, **dadurch gekennzeichnet, dass** sie eine Werkstückwechseleinrichtung (90), insbesondere einen Arbeitsroboter (91), zum Auswechseln von Werkstücken (P) an der Werkstückhalteeinrichtung (50) aufweist, die eine Positionierbewegung des Werkstückhalters (51) während der Werkstückbearbeitung durch das jeweilige Bearbeitungswerkzeug (25) mitmacht und zum Austausch mindestens eines nicht in der Werkstückbearbeitung befindlichen Werkstücks (P) an dem Werkstückhalter während der Werkstückbearbeitung eines anderen vom Werkstückhalter (51) gehaltenen Werkstücks durch die erste Spindelbaugruppe (21; 121) ausgestaltet ist.

2. Werkzeugmaschine nach Anspruch 1, **dadurch gekennzeichnet, dass** sie zur Synchronisierung der Bewegungen der Werkstückhalteeinrichtung (50) und der Werkstückwechseleinrichtung (90) eine gemeinsame Steuerung zur Ansteuerung der Werkstückhalteeinrichtung (50) und der Werkstückwechseleinrichtung (90) oder eine zur Ansteuerung der Werkstückhalteeinrichtung (50) vorgesehene Halter-Steuerung und eine zur Ansteuerung der Werkstückwechseleinrichtung (90) vorgesehene und mit der Halter-Steuerung synchronisierte Wechsler-Steuerung aufweist.

3. Werkzeugmaschine nach Anspruch 2, **dadurch gekennzeichnet, dass** die Steuerung zur Ausführung eines ersten Steuerungsmoduls und eines zweiten Steuerungsmoduls (105) ausgestaltet ist, die gemeinsam auf einem Prozessor der Steuerung ausführbar sind und unmittelbar miteinander kommunizieren, insbesondere über einen gemeinsamen Speicherbereich, oder dass die Steuerung zur Ausführung eines einzigen Steuerungsmoduls (103) ausgestaltet ist, das zur Ansteuerung der Werkstückhalteeinrichtung (50) und der Werkstückwechseleinrichtung (90) ausgestaltet ist.

4. Werkzeugmaschine nach einem der vorhergehenden Ansprüche, **dadurch gekennzeichnet, dass** die Werkstückwechseleinrichtung (90) oder deren Steuerung eine Eingangsschnittstelle (106) aufweist, über die ein die Position der Werkstückhalteeinrichtung (50) enthaltendes Positionssignal empfangbar ist, und die Werkstückwechseleinrichtung (90) zur Ausführung einer Überlagerung-Positionierbewegung ausgestaltet ist, bei der einer ersten zum Austauschen von Werkstücken (P) bei einer ortsfest stehenden Werkstückhalteeinrichtung (50) vorgesehenen Positionierbewegung eine zweite Positionierbewegung zum simultanen Folgen der Bewegung der Werkstückhalteeinrichtung (50) überlagert ist.

5. Werkzeugmaschine nach einem der vorhergehenden Ansprüche, **dadurch gekennzeichnet, dass** an der Werkstückhalteeinrichtung (50) eine Positionsmarkierung (107), insbesondere eine FunkMarkierung und/oder eine optische Markierung, angeordnet ist und die Werkstückwechseleinrichtung (90) eine Ortungseinrichtung (108) zur Ortung der Positionsmarkierung (107) und zu deren Verfolgung aufweist, so dass die Werkstückwechseleinrichtung (90) einer Bewegung der Werkstückhalteeinrichtung (50) folgen kann.

6. Werkzeugmaschine nach einem der vorhergehenden Ansprüche, **dadurch gekennzeichnet, dass** an der Werkstückwechseleinrichtung (90) eine Werkstückmagazin-Halterung (99) zum Halten mindestens zweier Werkstücke (P) vorgesehen ist, so dass die Werkstückwechseleinrichtung (90) simultan mindestens zwei Werkstücke (P) an der Werkstückhalteeinrichtung (50) auswechseln kann.

7. Werkzeugmaschine nach einem der vorhergehenden Ansprüche, **dadurch gekennzeichnet, dass** an der Werkstückhalteeinrichtung (50) mindestens eine Einführschräge (16) zum Einführen des jeweiligen Werkstücks (P) und/oder eine Rasteinrichtung (15) zum Verrasten des jeweiligen Werkstücks vorgesehen ist.

8. Werkzeugmaschine nach einem der vorhergehenden Ansprüche, **dadurch gekennzeichnet, dass** die Werkstückwechseleinrichtung (90) zum Betätigen der Werkstückhalteeinrichtung (50) in eine zum Halten eines Werkstücks (P) vorgesehene Haltestellung und/oder in eine zum Freigeben und Entfernen eines Werkstücks (P) vorgesehene Lösestellung ausgestaltet ist.

9. Werkzeugmaschine nach einem der vorhergehenden Ansprüche, **dadurch gekennzeichnet, dass** die Werkstückwechseleinrichtung (90) zur Positionierung der Werkstücke (P) zu mindestens einer weiteren Arbeitsstation abseits der Werkstückhalteeinrichtung (50), insbesondere zum Entgraten und/oder Kennzeichnen und/oder Vermessen von Werkstücken (P), ausgestaltet ist.

10. Werkzeugmaschine nach einem der vorhergehenden Ansprüche, **dadurch gekennzeichnet, dass** die Werkstückwechseleinrichtung (90) zusätzlich zu dem Auswechseln von Werkstücken (P) auch zum Auswechseln von Bearbeitungswerkzeugen (25) an einem Werkzeugmagazin und/oder an der mindestens einen ortsfest im Arbeitsbereich (A) angeordneten Arbeitsspindel (24), insbesondere zum Durchgreifen eines Gestells der Werkzeughalteeinrichtung, ausgestaltet ist.

11. Werkzeugmaschine nach einem der vorhergehenden Ansprüche, **dadurch gekennzeichnet, dass** sie mindestens eine zweite Spindelbaugruppe (22; 122) mit mindestens einer Arbeitsspindel (24) aufweist.

12. Werkzeugmaschine nach einem der vorhergehenden Ansprüche, **dadurch gekennzeichnet, dass** die erste und/oder die zweite Spindelbaugruppe (22; 122) mindestens eine zweite Arbeitsspindel (24) aufweisen.

13. Werkzeugmaschine nach Anspruch 12, **dadurch gekennzeichnet, dass** die erste Spindelbaugruppe (21; 121) an einer ersten Spindelbaugruppenführung (31; 131) der Führungsanordnung (30; 130) und die mindestens eine zweite Spindelbaugruppe (22; 122) an einer von der ersten Spindelbaugruppenführung (31; 131) separaten zweiten Spindelbaugruppenführung (32; 132) der Führungsanordnung (30; 130) geführt sind, so dass die Spindelbaugruppen unabhängig voneinander in einen Arbeitsbereich (A), in dem die Werkstücke für die Werkstückbearbeitung von der Werkstückhalteeinrichtung (50) bereitgestellt werden, und einen zum Wechseln von Bearbeitungswerkzeugen (25) an den Arbeitsspindeln (24) vorgesehenen Werkzeugwechselbereich (W) verstellbar sind.

14. Werkzeugmaschine nach Anspruch 13, **dadurch gekennzeichnet, dass** der Werkzeugwechselbereich (W) für mindestens zwei Spindelbaugruppen an einer einzigen Werkzeugwechsel-Seite (42) neben dem Arbeitsbereich (A) vorgesehen ist, so dass die mindestens zwei Spindelbaugruppen für den Werkzeugwechsel jeweils zu derselben Werkzeugwechsel-Seite (42) bewegt werden.

## Claims

1. Machine tool for machining workpieces (P), wherein the machine tool (10; 100) comprises at least one first spindle assembly (21; 121) with at least one working spindle (24), on which a machining tool (25) for workpiece machining can be located, wherein the machine tool comprises a workholding device (50) for holding workpieces (P) for workpiece machining with the machining tool (25), wherein the machine tool (10; 100) comprises a guide arrangement (30; 130) for the relative positioning of the workholding device (50) holding workpieces (P) and the first spindle assembly (21; 121) for workpiece machining, wherein the guide arrangement (30; 130) comprises a workholder guide (59, 62) for guiding the workholding device (50) for positioning a workholder (51) holding the workpieces (P) relative to the first spindle assembly (21; 121), **characterised in that** it comprises a workpiece exchange device (90), in particular a working robot (91), for exchanging workpieces (P) at the workholding device (50), which workpiece exchanging device (90) joins a positioning movement of the workholder (51) during workpiece machining by the respective machining tool (25) and is designed for exchanging at least one workpiece (P) which is not being machined at the workholder while another workpiece held by the workholder (51) is being machined by the first spindle assembly (21; 121).

2. Machine tool according to claim 1, **characterised in that** it comprises, for the synchronisation of the movements of the workholding device (50) and the workpiece exchanging device (90), a common control unit for activating the workholding device (50) and the workpiece exchanging device (90) or a holder control unit for activating the workholding device (50) and an exchanger control unit synchronised with the holder control unit for activating the workpiece exchanging device (90).

3. Machine tool according to claim 2, **characterised in that** the control unit is designed for executing a first control module and a second control module (105), which can be jointly executed on a processor of the control unit and directly communicate with each other, in particular via a common memory area, or **in that** the control unit is designed for executing a single control module (105) designed for activating the workholding device (50) and the workpiece exchanging device (90).

4. Machine tool according to any of the preceding claims, **characterised in that** the workpiece exchanging device (90) or its control unit comprises an input interface (106), via which a position signal containing the position of the workholding device (50) can be received, and **in that** the workpiece exchanging device (90) is designed for performing a superimposed positioning movement in which a second positioning movement for simultaneously following the movement of the workholding device (50) is superimposed on a first positioning movement provided for exchanging workpieces (P) at a stationary workholding device (50).

5. Machine tool according to any of the preceding claims, **characterised in that** a position marking (107), in particular a radio marking and/or an optical marking, is located on the workholding device (50), and **in that** the workpiece exchanging device (90) comprises a locating device (108) for locating and tracing the position marking (107), so that the workpiece exchanging device (90) can follow a movement of the workholding device (50).

6. Machine tool according to any of the preceding claims, **characterised in that** a workpiece magazine holder for holding at least two workpieces (P) is provided on the workpiece exchanging device (90), so that the workpiece exchanging device (90) can simultaneously exchange at least two workpieces (P) at the workholding device (50).

7. Machine tool according to any of the preceding claims, **characterised in that** at least one feed slant (16) for inserting the respective workpiece (P) and/or a latching device (15) for latching the respective workpiece is/are provided on the workholding device (50).

8. Machine tool according to any of the preceding claims, **characterised in that** the workpiece exchanging device (90) is designed for moving the workholding device (50) into a holding position provided for holding a workpiece (P) and/or into a release position provided for releasing and removing a workpiece (P).

9. Machine tool according to any of the preceding claims, **characterised in that** the workpiece exchanging device (90) is designed for moving the workpieces (P) to at least one further work station away from the workholding device (50), in particular for deburring and/or marking and/or measuring workpieces (P).

10. Machine tool according to any of the preceding claims, **characterised in that** the workpiece exchanging device (90) is designed, in addition for the exchange of workpieces (P), for exchanging machining tools (25) at a tool magazine and/or at the at least one working spindle (24) located in a stationary manner in the working area (A), in particular for passing through a frame of the tool holding device.

11. Machine tool according to any of the preceding claims, **characterised in that** it comprises at least one second spindle assembly (22; 122) with at least one working spindle (24).

12. Machine tool according to any of the preceding claims, **characterised in that** the first and/or the second spindle assembly (22; 122) comprise(s) at least one second working spindle (24).

13. Machine tool according to claim 12, **characterised in that** the first spindle assembly (21; 121) is guided on a first spindle assembly guide (31; 131) of the guide arrangement (30; 130) and the at least one second spindle assembly (22; 122) is guided on a second spindle assembly guide (32; 132) of the guide arrangement (30; 130), so that the spindle assemblies can be independently moved into a working area (A), in which the workpieces are made available for workpiece machining by the workholding device (50), and into a tool change area (W) provided for exchanging machining tools (25) at the working spindles (24).

14. Machine tool according to claim 13, **characterised in that** the tool change area (W) for at least two spindle assemblies is provided on a single tool change side (42) adjacent to the working area (A), so that the at least two spindle assemblies are in each case moved to the same tool change side (42) for tool change.

## Revendications

1. Machine-outil pour l'usinage de pièce de pièces à usiner (P), dans laquelle la machine-outil (10 ; 100) présente au moins un premier ensemble de broche (21 ; 121) avec au moins une broche de travail (24), sur laquelle un outil d'usinage (25) peut être agencé pour l'usinage de pièce, dans laquelle la machine-outil présente un dispositif de maintien de pièce (50) pour le maintien de pièces à usiner (P) pour l'usinage de pièce avec l'outil d'usinage (25), dans laquelle la machine-outil (10 ; 100) présente un agencement de guidage (30 ; 130) pour le positionnement relatif du dispositif de maintien de pièce (50) maintenant les pièces à usiner (P) et du premier ensemble de broche (21 ; 121) pour l'usinage de pièce, dans laquelle l'agencement de guidage (30; 130) comprend un guidage de support de pièce (59, 62) pour le guidage du dispositif de maintien de pièce (50) pour un positionnement d'un support de pièce (51) maintenant les pièces à usiner (P) par rapport au premier ensemble de broche (21 ; 121), **caractérisée en ce qu'**elle présente un dispositif de changement de pièce (90), en particulier un robot de travail (91), pour le changement de pièces à usiner (P) sur le dispositif de maintien de pièce (50) qui participe à un mouvement de positionnement du support de pièce (51) pendant l'usinage de pièce par l'outil d'usinage (25) respectif et est configuré pour l'échange d'au moins une pièce à usiner (P) ne se trouvant pas dans l'usinage de pièce sur le support de pièce pendant l'usinage de pièce d'une autre pièce à usiner maintenue par le support de pièce (51) par le premier ensemble de broche (21 ; 121).

2. Machine-outil selon la revendication 1, **caractérisée en ce qu'**elle présente, pour la synchronisation des mouvements du dispositif de maintien de pièce (50) et du dispositif de changement de pièce (90), une commande commune pour la commande du dispositif de maintien de pièce (50) et du dispositif de changement de pièce (90) ou une commande de support prévue pour la commande du dispositif de maintien de pièce (50) et une commande de changeur prévue pour la commande du dispositif de changement de pièce (90) et synchronisée avec la commande de support.

3. Machine-outil selon la revendication 2, **caractérisée en ce que** la commande est configurée pour la réalisation d'un premier module de commande et d'un second module de commande (105) qui sont réalisables ensemble sur un processeur de la commande et communiquent entre eux directement, en particulier par une zone de stockage commune, ou **en ce que** la commande est configurée pour la réalisation d'un seul module de commande (103) qui est configuré pour la commande du dispositif de maintien de pièce (50) et du dispositif de changement de pièce (90).

4. Machine-outil selon l'une des revendications précédentes, **caractérisée en ce que** le dispositif de changement de pièce (90) ou sa commande présente une interface d'entrée (106), par laquelle un signal de position contenant la position du dispositif de maintien de pièce (50) peut être reçu, et le dispositif de changement de pièce (90) est configuré pour la réalisation d'un mouvement de positionnement de chevauchement, pour lequel un second mouvement de positionnement est recouvert par un premier mouvement de positionnement prévu pour l'échange de pièces à usiner (P) pour un dispositif de maintien de pièce (50) situé fixement pour le suivi simultané du mouvement du dispositif de maintien de pièce (50).

5. Machine-outil selon l'une des revendications précédentes, **caractérisée en ce qu'**un marquage de position (107), en particulier un marquage radio et/ou un marquage optique est agencé sur le dispositif de maintien de pièce (50), et le dispositif de changement de pièce (90) présente un dispositif de localisation (108) pour la localisation du marquage de position (107) et pour sa poursuite, de sorte que le dispositif de changement de pièce (90) puisse suivre un mouvement du dispositif de maintien de pièce (50).

6. Machine-outil selon l'une des revendications précédentes, **caractérisée en ce que** sur le dispositif de changement de pièce (90), un support de magasin de pièce (99) est prévu pour le maintien d'au moins deux pièces à usiner (P) de sorte que le dispositif de changement de pièce (90) puisse changer simultanément au moins deux pièces à usiner (P) sur le dispositif de maintien de pièce (50).

7. Machine-outil selon l'une des revendications précédentes, **caractérisée en ce que** sur le dispositif de maintien de pièce (50), au moins un biais d'introduction (16) est prévu pour l'introduction de la pièce à usiner (P) respective et/ou un dispositif d'encliquetage (15) est prévu pour l'encliquetage de la pièce à usiner respective.

8. Machine-outil selon l'une des revendications précédentes, **caractérisée en ce que** le dispositif de changement de pièce (90) est configuré pour l'actionnement du dispositif de maintien de pièce (50) dans une position de retenue prévue pour le maintien d'une pièce à usiner (P) et/ou dans une position de détachement prévue pour la libération et le retrait d'une pièce à usiner (P).

9. Machine-outil selon l'une des revendications précédentes, **caractérisée en ce que** le dispositif de changement de pièce (90) est configuré pour le positionnement des pièces à usiner (P) vers au moins un autre poste de travail à l'écart du dispositif de maintien de pièce (50), en particulier pour l'ébavurage et/ou la caractérisation et/ou la mesure de pièces à usiner (P).

10. Machine-outil selon l'une des revendications précédentes, **caractérisée en ce que** le dispositif de changement de pièce (90) est configuré, outre pour le changement de pièces à usiner (P), aussi pour le changement d'outils d'usinage (25) sur un magasin d'outil et/ou sur l'au moins une broche de travail (24) agencée fixement dans la zone de travail (A), en particulier pour la pénétration d'un bâti du dispositif de maintien de broche.

11. Machine-outil selon l'une des revendications précédentes, **caractérisée en ce qu'**elle présente au moins un second ensemble de broche (22 ; 122) avec au moins une broche de travail (24).

12. Machine-outil selon l'une des revendications précédentes, **caractérisée en ce que** le premier et/ou le second ensemble de broche (22 ; 122) présente au moins une seconde broche de travail (24).

13. Machine-outil selon la revendication 12, **caractérisée en ce que** le premier ensemble de broche (21 ; 121) est guidé sur un premier guidage d'ensemble de broche (31 ; 131) de l'agencement de guidage (30 ; 130) et l'au moins un second ensemble de broche (22 ; 122) sur un second guidage d'ensemble de broche (32 ; 132) séparé du premier guidage d'ensemble de broche (31 ; 131) de l'agencement de guidage (30 ; 130) de sorte que les ensembles de broche soient déplaçables indépendamment l'un de l'autre dans une zone de travail (A), dans laquelle les pièces à usiner pour l'usinage de pièce sont mises à disposition par le dispositif de maintien de pièce (50), et une zone de changement d'outil (W) prévue pour le changement d'outils d'usinage (25) sur les broches de travail (24).

14. Machine-outil selon la revendication 13, **caractérisée en ce que** la zone de changement d'outil (W) pour au moins deux ensembles de broche est prévue sur un seul côté de changement d'outil (42) à côté de la zone de travail (A) de sorte que les au moins deux ensembles de broche pour le changement d'outil soient déplacés respectivement vers le même côté de changement d'outil (42).
